# EUROPÄISCHE PATENTSCHRIFT

(11) **EP 3 384 264 B1**
(45) Veröffentlichungstag und Bekanntmachung des Hinweises auf die Patenterteilung: **26.07.2023**
(21) Anmeldenummer: 16782067.9
(22) Anmeldetag: 17.10.2016
(51) Int. Cl.: G01L 19/14

(54) **VERFAHREN ZUR HERSTELLUNG EINER VORRICHTUNG ZUR ERFASSUNG MINDESTENS EINER EIGENSCHAFT EINES FLUIDEN MEDIUMS IN EINEM MESSRAUM**
METHOD FOR PRODUCING A DEVICE FOR DETECTING AT LEAST ONE PROPERTY OF A FLUID MEDIUM IN A MEASURING CHAMBER
PROCÉDÉ DE FABRICATION D'UN DISPOSITIF DE DÉTECTION D'AU MOINS UNE CARACTÉRISTIQUE D'UN MILIEU FLUIDE DANS UNE CHAMBRE DE MESURE

(30) Priorität: 01.12.2015 DE 102015223850
(43) Veröffentlichungstag der Anmeldung: 10.10.2018
(73) Patentinhaber: Robert Bosch GmbH, 70442 Stuttgart (DE)
(72) Erfinder: WOLF, Ronny, 99817 Eisenach (DE); LUX, Alexander, 99897 Tambach-Dietharz (DE); REINHARD, Markus, 70806 Kornwestheim (DE); BARNSTORFF, Vincent, 99817 Eisenach (DE); OTTO, Andreas, 99819 Hoerselberg-Hainich (DE); ROEHLER, Andreas, 99817 Eisenach (DE); VOLLERT, Jens, 99974 Muehlhausen (DE); PATZNER, Patrik, 71229 Leonberg (DE)
(86) Internationale Anmeldenummer: PCT/EP2016/074896
(87) Internationale Veröffentlichungsnummer: WO 2017/092921

(56) Entgegenhaltungen:
- EP-A2- 2 136 193
- DE-A1- 19 731 420
- DE-A1-102007 033 040
- US-A1- 2014 341 255

## Beschreibung

### Stand der Technik

Aus dem Stand der Technik ist eine Vielzahl von Sensoren zur Erfassung mindestens einer Eigenschaft eines fluiden Mediums in einem Messraum bekannt. Derartige Sensoren sind beispielsweise in Konrad Reif: Sensoren im Kraftfahrzeug, 1. Auflage 2010, Seiten 134 bis 135, Bild 3 und Bild 4, beschrieben.

Ein wichtiges Einsatzgebiet für einen Einsatz von derartigen Sensoren ist die Kraftfahrzeugtechnik. Beispielsweise kann ein Einsatz von alternativen Kraftstoffen, wie beispielsweise Erdgas, CNG (compressed natural gas), Ethanol oder ähnlichen alternativen Kraftstoffen, den Einsatz angepasster Sensoren, um physikalische Größen wie Druck und Temperatur in einem Saugrohr oder in einem Kraftstoffsystem zu ermitteln, bedingen. Beispielsweise können sogenannte Mitteldrucksensoren eine Messung von einem Druck und/oder einer Temperatur in einem mit CNG-betriebenen Kraftstoffsystem ermöglichen.

Aus DE 102012223014 A1 ist eine Vorrichtung zur Erfassung des Drucks und der Temperatur eines Mediums sowie ein Verfahren zur Herstellung einer derartigen Vorrichtung bekannt. Die beschriebene Vorrichtung weist einen in einem gemeinsamen Gehäuse angeordneten Temperatursensor und Drucksensor auf, wobei das Gehäuse weiterhin wenigstens einen Messraum umfasst. Der Messraum ist über einen Druckstutzen mit einem das Medium aufnehmenden Raum verbunden, wobei der Drucksensor in dem Messraum angeordnet ist. Ferner weist der Temperatursensor Anschlussleitungen auf. In dem Gehäuse sind zur Kontaktierung der Anschlussleitungen des Temperatursensors entsprechende Anschlusskontake vorgesehen. Weiterhin ist zur Aufnahme des Temperatursensors in dem Gehäuse wenigstens eine in den Druckstutzen mündende konische Durchführung angeordnet, wobei sich die konische Durchführung zum Druckstutzen hin erweitert. Ebenso ist es vorgesehen, dass in der konischen Durchführung wenigstens abschnittsweise eine die Anschlussleitungen des Temperatursensors umschließende Dichtmasse eingebracht ist.

In DE 10223357 A1 wird eine Vorrichtung zur Druckmessung vorgeschlagen, welche ein Gehäuse aufweist, in dem ein mit einem Sensorelement und mit elektrischen Anschlusselementen versehener Träger angeordnet ist, wobei das Gehäuse einen das Sensorelement umgebenden und mit einem ersten Druckkanal eines ersten Druckanschlusses verbundenen ersten Gehäuseraum und einen gegenüber dem ersten Gehäuseraum abgedichteten, wenigstens die elektrischen Anschlusselemente umgebenden zweiten Gehäuseraum aufweist und wobei das Gehäuse einen gegenüber dem ersten Gehäuseraum und dem zweiten Gehäuseraum abgedichteten dritten Gehäuseraum aufweist, der mit einem zweiten Druckkanal eines zweiten Druckanschlusses verbunden ist.

In DE 19731420 A1 wird eine Vorrichtung zur Erfassung des Drucks und der Temperatur im Saugrohr einer Brennkraftmaschine vorgeschlagen. In einem gemeinsamen Gehäuse sind ein Temperatursensor und ein auf einem Träger zusammen mit einer Auswerteschaltung weitestgehend verspannungsarm befestigter Drucksensor angeordnet. Das Gehäuse umfasst wenigstens zwei voneinander getrennte Räume, dessen einer einen mit dem Saugrohr über einen Stutzen verbundenen, gegenüber der Umgebung abgedichteten Druckraum bildet, in dem der Teil des Trägers angeordnet ist, auf dem der Drucksensor befestigt ist, um dessen anderer der Aufnahme und Befestigung des restlichen Teils des Trägers mit den Anschlusselementen dient. Zur Befestigung des Trägers und zur Abdichtung des Drucksensors sind mechanische Spannungen entkoppelnde Dichtklebeverbindungen vorgesehen.

Weitere Vorrichtungen zur Erfassung des Drucks und der Temperatur sind aus EP 2 136 193 A2; US 2014/341255 A1 und DE 10 2007 033 040 A1 bekannt.

Aufgrund von zunehmenden Anforderungen, insbesondere im Hinblick auf Druck, Temperatur, mechanischen Schwingungen und/oder Medienbelastung, sowie aufgrund von zunehmenden Kosten kann grundsätzlich ein verbesserter Aufbau mit einem vereinfachten Gesamtaufbaukonzept wünschenswert sein.

### Offenbarung der Erfindung

Es wird daher gemäß Anspruch 1 ein Verfahren zur Herstellung einer Vorrichtung zur Erfassung mindestens einer Eigenschaft eines fluiden Mediums in einem Messraum vorgeschlagen, welches den oben genannten Stand der Technik in vorteilhafter Weise weiterentwickelt.

Das Verfahren umfasst die Verfahrensschritte, welche im Folgenden beschrieben werden. Die Verfahrensschritte können beispielsweise in der vorgegebenen Reihenfolge durchgeführt werden. Eine andere Reihenfolge ist jedoch ebenfalls denkbar. Weiterhin können ein oder mehrere Verfahrensschritte gleichzeitig oder zeitlich überlappend durchgeführt werden. Weiterhin können einer, mehrere oder alle der Verfahrensschritte einfach oder auch wiederholt durchgeführt werden. Das Verfahren kann darüber hinaus noch weitere Verfahrensschritte umfassen.

Das Verfahren gemäß Anspruch 1 umfasst die folgenden Schritte:
a) Bereitstellen eines Gehäuses, wobei das Gehäuse mindestens einen elektrischen Kontakt aufweist;
b) Bereitstellen eines Druckstutzens, wobei der Druckstutzen ausgebildet ist, um ein fluides Medium zu einem Drucksensor zu führen, und eine Durchführung aufweist, wobei der Druckstutzen weiterhin mindestens ein Kontaktierungselement umfasst; wobei das Gehäuse und der Druckstutzen als separate Bauteile hergestellt werden,
c) Einbringen eines Sensorelementes zur Erfassung der Eigenschaft in das Gehäuse, wobei das Sensorelement als Temperatursensor mit mindestens einer Anschlussleitung ausgebildet ist und in dem Druckstutzen angeordnet wird, wobei die Anschlussleitung in der Durchführung des Druckstutzens angeordnet wird,
d) Inkontaktbringen des Kontaktierungselements mit dem als Temperatursensor ausgebildeten Sensorelement derart, dass eine elektrische Verbindung zwischen dem Kontaktierungselement und dem als Temperatursensor ausgebildeten Sensorelement hergestellt wird; wobei das Inkontaktbringen des Kontaktierungselements mit dem als Temperatursensor ausgebildeten Sensorelement mindestens ein Schneidklemmverfahren umfasst; und
e) Einbringen eines Schaltungsträgers, auf den der Drucksensor aufgebracht ist, in das Gehäuse derart, dass der Drucksensor dem Druckstutzen zuweist und der Schaltungsträger mit dem elektrischen Kontakt des Gehäuses und, indem das Kontaktierungselement durch eine Einpresstechnik auf den Schaltungsträger aufgebracht wird, mit dem als Temperatursensor ausgebildeten Sensorelement elektrisch verbunden wird.

Das Gehäuse und der Druckstutzen werden als separate Bauteile hergestellt.

Unter einem "fluiden Medium" im Sinne der vorliegenden Erfindung ist grundsätzlich ein beliebiger Stoff im fluiden, insbesondere gasförmigen, Zustand zu verstehen, welcher einer beliebig langsamen Scherung keinen Widerstand entgegensetzt. Insbesondere kann es sich bei dem fluiden Medium um ein Gas und/oder um eine Flüssigkeit handeln. Im Allgemeinen kann der fluide Zustand eines Stoffes temperatur- und/oder druckabhängig sein. Das fluide Medium kann als Reinstoff oder als Stoffgemisch vorliegen. Bei der mindestens einen Eigenschaft kann es sich um eine beliebige physikalische und/oder chemische und/oder biologische Eigenschaft des fluiden Mediums handeln, insbesondere kann die mindestens eine Eigenschaft der Druck und/oder die Temperatur des fluiden Mediums sein.

Der Begriff "Messraum" bezeichnet im Sinne der vorliegenden Erfindung insbesondere einen beliebigen Raum in oder an einer Brennkraftmaschine, beispielsweise in einem Saugrohrer einer Brennkraftmaschine. Der Messraum kann insbesondere das fluide Medium aufweisen.

Unter einem "Sensorelement" kann im Sinne der vorliegenden Erfindung grundsätzlich beliebiges Element verstanden werden, welches mindestens eine Messgröße erfasst und mindestens ein Signal, insbesondere ein Sensorsignal, generiert, beispielsweise ein elektrisches Signal, aus welchem auf eine Messgröße rückgeschlossen werden kann. Die Vorrichtung kann insbesondere eine Schnittstelle aufweisen, welche ganz oder teilweise als Hardware und/oder als Software ausgebildet sein kann. Das Sensorelement kann insbesondere eingerichtet sein, um eine Messgröße, beispielsweise eine Messgröße ausgewählt aus einer physikalischen, einer chemischen oder einer biologischen Messgröße, insbesondere des Drucks und/oder der Temperatur des Mediums, in ein elektrisches Signal, bevorzugt in eine elektrische Spannung und/oder einen elektrischen Strom umzuwandeln. Anders ausgedrückt kann das Sensorelement in Abhängigkeit eines auf ihn ausgeübten Drucks und/oder in Abhängigkeit einer umgebenden Temperatur ein entsprechendes Ausgangssignal, beispielsweise in Form einer Spannung und/oder eines Stromes erzeugen. Das Signal kann digital oder auch analog sein. Es können grundsätzlich mehrere Arten von Sensorelementen vorgesehen sein, welche nicht notwendigerweise mit derselben Technik kontaktiert bzw. angebracht werden.

Erfindungsgemäß weist die Vorrichtung ein als Temperatursensor ausgebildetes Sensorelement auf. Das als Temperatursensor ausgebildete Sensorelement umfasst mindestens eine Anschlussleitung. Der Begriff "Anschlussleitung" bezeichnet im Sinne der vorliegenden Erfindung grundsätzlich eine beliebige elektrische Leitung handeln, welche aus einem elektrisch leitfähigen Material hergestellt ist und eingerichtet ist, um eine elektrische Verbindung zwischen zwei oder mehr Bauteilen herzustellen. Insbesondere kann die Anschlussleitung aus Kupfer hergestellt sein. Auch andere elektrisch leitfähige Materialien sind grundsätzlich denkbar. Beispielsweise kann es sich bei der Anschlussleitung um ein Kabel handeln. Die Anschlussleitung kann mindestens einen Isolationsmantel umfassen, welcher aus einem elektrisch isolierenden Material, insbesondere aus einem elektrisch isolierenden Kunststoffmaterial, hergestellt sind und eingerichtet ist, um die Anschlussleitung elektrisch von einer Umgebung der Anschlussleitung zu isolieren. Vor Einbringen des Sensorelements in das Gehäuse, kann die Anschlussleitung des Sensorelements gebogen werden.

Weiterhin weist die Vorrichtung ein weiteres Sensorelement auf, das als Drucksensor ausgebildet ist. Der Drucksensor ist auf dem Schaltungsträger aufgebracht.

Der Begriff "Schaltungsträger" bezeichnet im Sinne der vorliegenden Erfindung grundsätzlich ein beliebiges Element, welches ausgestaltet sein kann, um mindestens eine Ansteuerung und/oder mindestens eine Auswerteschaltung, beispielsweise eine elektrische und/oder elektronische Schaltung, zu tragen und/oder zu umfassen. Der Schaltungsträger kann eine Steuer- und Auswerteeinheit umfassen, welche eingerichtet ist, um den Sensor anzusteuern. Insbesondere kann es sich bei der Steuer- und Auswerteeinheit um eine anwendungsspezifische integrierte Schaltung (ASIC) handeln.

Bei dem Schaltungsträger kann es sich beispielsweise um einen Keramikschaltungsträger handeln. Der Schaltungsträger kann beispielsweise ganz oder teilweise als Leiterplatte ausgestaltet sein oder mindestens eine Leiterplatte umfassen. Auch andere Ausgestaltungen sind grundsätzlich denkbar. Der Schaltungsträger kann mindestens einen elektronischen Baustein und/oder mindestens eine Leiterbahn umfassen. Weiterhin kann der Schaltungsträger mindestens eine elektrische Kontaktfläche, insbesondere mindestens einen Kontaktpad, umfassen. Die elektrische Kontaktfläche kann aus einem elektrisch leitfähigen Material hergestellt sein und eine beliebige Form der Grundfläche aufweisen.

Der Schaltungsträger kann mindestens eine Oberseite und mindestens eine Unterseite umfassen. Der Begriff "Unterseite" des Schaltungsträgers bezeichnet grundsätzlich eine Oberfläche des Schaltungsträgers, welche im Druckstutzen zuweist. Der Begriff "Oberseite" des Schaltungsträgers bezeichnet grundsätzlich im Sinne der vorliegenden Erfindung eine gegenüberliegende Oberfläche der Oberseite des Schaltungsträgers. Beispielsweise kann insbesondere der Drucksensor auf der Unterseite des Schaltungsträgers angeordnet sein.

Der Begriff "Gehäuse" bezieht sich im Sinne der vorliegenden Erfindung grundsätzlich auf eine beliebige Form eines Elements, welches eingerichtet ist, um Bauteile der Vorrichtung ganz oder zumindest teilweise zu umschließen und um diese Bauteile weiterhin vor externen Einflüssen wie mechanischer Belastung und/oder Feuchtigkeit und/oder weiteren Medien zu schützen. Das Gehäuse kann zumindest teilweise aus mindestens einem Kunststoffmaterial hergestellt werden. Insbesondere kann das Gehäuse mittels mindestens eines Spritzgießprozesses hergestellt werden.

Die Vorrichtung weist weiterhin einen Druckstutzen auf. Der Begriff "Druckstutzen" bezeichnet grundsätzlich im Rahmen der vorliegenden Erfindung grundsätzlich ein beliebiges Element, welches eingerichtet ist, das fluide Medium zu dem Sensorelement zu führen. Der Druckstutzen kann beispielsweise rotationssysmmetrisch, beispielsweise in Form eines Hohlzyinders ausgestaltet sein. Eine andere Ausgestaltung ist jedoch ebenfalls denkbar. Der Druckstutzen umfasst eine Durchführung. Die Durchführung kann insbesondere eine Bohrung oder Öffnung mit einer beliebigen Querschnittsfläche sein, beispielsweise eine zylindrische Bohrung mit einem runden oder polygonalen Querschnitt. Der Druckstutzen kann insbesondere in den Messraum hineinragen. Der Druckstutzen kann mindestens ein Dichtelement zur Abdichtung gegen eine Wand des Messraums aufweisen, insbesondere einen O-Ring. Alternativ oder zusätzlich ist eine Geometrie für einen Schlauchanschluss denkbar.

Der Druckstutzen und das Gehäuse sind, wie oben aufgeführt, als separate Bauteile ausgebildet. Der Begriff "separat" bezeichnet im Sinne der vorliegenden Erfindung, dass die Bauteile in voneinander getrennten Verfahren hergestellt werden. Anschließend können die Bauteile miteinander verbunden werden, insbesondere stoffschlüssig. Der Begriff "stoffschlüssig" bezeichnet insbesondere im Rahmen der vorliegenden Erfindung grundsätzlich eine Eigenschaft einer Verbindung zwischen zwei oder mehreren Bauteilen, bei welcher die Bauteile durch atomare Kräfte und/oder durch molekulare Kräfte zusammengehalten werden. Beispielsweise können die Bauteile mittels mindestens eines Klebeverfahrens miteinander verbunden werden. Alternativ oder zusätzlich können die Bauteile formschlüssig miteinander verbunden werden. Der Begriff "formschlüssig" bezeichnet im Rahmen der vorliegenden Erfindung eine Eigenschaft einer Verbindung zwischen zwei oder mehrerer Bauteilen, bei welcher die Bauteile durch ein Ineinandergreifen zusammengehalten werden. Dadurch können sich die Bauteile ohne oder auch bei einer Kraftübertragung nicht voneinander lösen. Eine formschlüssige Verbindung kann insbesondere eine Verrastung der mindestens zwei Bauteile umfassen. Insbesondere kann eines der zwei Bauteile eine Aufnahme umfassen und das zweite Bauteile kann mindestens ein komplementäres Element umfassen, welches eingerichtet ist, um in die Aufnahme aufgenommen und fixiert zu werden, derart, dass eine Bewegung des komplementären Elements in der Aufnahme ganz oder zumindest teilweise reduziert ist und ein Verschieben der Bauteile zueinander ganz oder zumindest teilweise reduziert ist. Ein Aufheben einer Verbindung zwischen der Aufnahme und des komplementären Elements kann nur durch ein Aufheben eines vorgegebenen Mechanismus erfolgen.

Der Begriff "elektrischer Kontakt" bezeichnet im Sinne der vorliegenden Erfindung grundsätzlich ein beliebiges Element, welches aus einem elektrisch leitfähigen Material hergestellt ist und welches eingerichtet ist, um eine elektrische Kontaktierung zwischen mindestens zwei Bauteilen herzustellen. Der elektrische Kontakt kann mindestens eine Auflagefläche umfassen. Insbesondere kann der elektrische Kontakt ganz oder teilweise aus Kupfer und/oder einer Kupferlegierung hergestellt sein. Weiterhin kann der elektrische Kontakt mindestens eine Oberflächenbeschichtung umfassen. Auch andere Materialien sind grundsätzlich denkbar. Insbesondere kann der elektrische Kontakt mindestens einen Kontaktstift umfassen, insbesondere mindestens einen Steckerpin. Der Kontaktstift kann vorzugsweise eine längliche Form aufweisen und mindestens einen Querschnitt aufweisen, ausgewählt aus der Gruppe bestehend aus: einem runden Querschnitt, einen quadratischen Querschnitt, einem rechteckigen Querschnitt. Auch andere Ausführungsformen sind grundsätzlich denkbar.

Der elektrische Kontakt kann insbesondere zumindest teilweise in das Gehäuse eingepresst werden. Insbesondere kann der elektrische Kontakt von einer Außenseite des Gehäuses in das Gehäuse eingepresst werden. Alternativ kann das Gehäuse mittels mindestens eines Spritzgießprozesses hergestellt werden, und der elektrische Kontakt kann zumindest teilweise in das Kunststoffmaterial eingebettet werden, insbesondere zumindest teilweise mit dem Kunststoffmaterial umspritzt werden. Weiterhin kann der elektrische Kontakt mittels mindestens einer Arretierung in das Gehäuse eingebracht werden. Der Begriff "Arretierung" bezeichnet im Sinne der vorliegenden Erfindung grundsätzlich, eine beliebige mechanische Vorrichtung, welche eingerichtet ist, um bewegliche Elemente festzustellen und/oder zu fixieren. Die Arretierung kann beispielsweise mindestens eine Aufnahme in dem Gehäuse umfassen, welche eingerichtet ist, um den elektrischen Kontakt aufzunehmen. Bei einem Aufsetzen Druckstutzens auf den das Gehäuse kann der elektrische Kontakt in die Aufnahme einrasten.

Der Begriff "Kontaktierungselement" bezeichnet grundsätzlich ein beliebiges Element, welches eingerichtet ist, um eine elektrische Verbindung zwischen zwei oder mehr Bauteilen herzustellen. Das Kontaktierungselement kann insbesondere aus einem elektrisch leitfähigen Material hergestellt sein und/oder mit einem elektrisch leitfähigen Material beschichtet sein. Das Kontaktierungselement kann mit mindestens einem der Bauteile nichtlösbar, insbesondere stoffschlüssig, verbunden sein. Alternativ oder zusätzlich kann das Kontaktierungselement lösbar mit mindestens einem der Bauteile verbunden sein, beispielsweise durch Kraftschluss. Der Begriff "Kraftschluss" bezeichnet im Sinne der vorliegenden Erfindung grundsätzlich, dass ein Zusammenhalt ganz oder zumindest teilweise durch mindestens eine wirkende Kraft gewährleistet ist, insbesondere durch mindestens eine Druckkraft und/oder durch mindestens eine Reibungskraft. Der Schaltungsträger wird mit dem elektrischen Kontakt verbunden. Das Kontaktierungselement wird durch eine Einpresstechnik auf den Schaltungsträger aufgebracht.

Das Kontaktierungselement kann insbesondere ein Schneid-Klemmelement zur Durchführung eines Schneidklemmverfahrens sein. Der Begriff "Schneidklemmverfahren" bezeichnet grundsätzlich ein beliebiges Verfahren, bei welchem eine elektrische Leitung elektrisch kontaktiert und mechanisch fixiert wird. Insbesondere kann die elektrische Leitung mindestens einen Isolationsmantel umfassen. Der Isolationsmantel kann mindestens ein elektrisch isolierendes Material umfassen. Bei einem Inkontaktbringen der elektrischen Leitung mit dem Schneidklemmelement kann das Schneidklemmelement zunächst mechanisch fixiert werden, insbesondere durch eine Klemmvorrichtung und anschließend kann der Isolationsmantel durchtrennt werden, derart, dass eine elektrische Verbindung zwischen der elektrischen Leitung und dem Schneidklemmelement hergestellt wird.

Das Inkontaktbringen des Kontaktierungselements mit dem Sensorelement kann mittels der mindestens einen Anschlussleitung des Sensorelements erfolgen. Das Inkontaktbringen des Kontaktierungselements mit dem Sensorelement erfolgt mittels mindestens des Schneidklemmverfahrens . Während Durchführung des Schritts d) kann der Isolationsmantel der Anschlussleitung an mindestens einer Stelle eingeschnitten werden.

Vor Durchführung des Schritts d) kann mindestens eine Passivierung von Verbindungsstellen erfolgen. Der Begriff "Passivierung" bezeichnet im Sinne der vorliegenden Erfindungen grundsätzlich ein Aufbringen mindestens einer Schutzschicht. Die Schutzschicht kann insbesondere eingerichtet sein, um eine Korrosion eines Werkstoffs ganz oder zumindest teilweise zu verhindern oder zumindest zu verlangsamen. Für die Passivierung kann beispielsweise ein Klebstoff in den Bereich der Kontaktierung des Temperatursensors eingebracht werden. Alternativ kann eine separate Kammer für die Passivierung verwendet werden. Dies kann insbesondere eine optische Kontrolle vor einer Positionierung des Schaltungsträgers ermöglichen. Für die Passivierung können insbesondere Klebstoffe, vorzugsweise Klebstoffe mit elastischem Verhalten, insbesondere Silikonklebstoffe, oder Gele, insbesondere Gele mit einer geringen mechanischen Belastung und/oder mit einer geringen Druckbelastung, verwendet werden.

Das Einbringen des Schaltungsträgers in das Gehäuse, insbesondere in eine Aufnahme des Gehäuses, kann derart erfolgen, dass der Schaltungsträger in dem Gehäuse fixiert wird, vorzugsweise mittels mindestens einer stoffschlüssigen Verbindungstechnik, vorzugsweise mittels mindestens einer Chiptechnik, insbesondere einer Chiptechnik ausgewählt aus der Gruppe bestehend aus: Kleben; Bonden; Vergelen. Insbesondere kann der Schaltungsträger derart in das Gehäuse eingebracht werden, dass die Unterseite des Schaltungsträgers dem Druckstutzen zugewandet ist. Der Schaltungsträger wird derart in das Gehäuse eingebracht, dass der Drucksensor dem Druckstutzen zuweist. Eine dem Drucksensor gegenüberliegende Seite des Schaltungsträgers, insbesondere die Oberseite des Schaltungsträgers, kann gegenüber dem Messraum abgedichtet sein, vorzugsweise durch eines oder mehrerer der folgenden Elemente: ein Dichtelement, eine Dichtmasse, einen Klebstoff. Es können Klebstoffe, vorzugsweise Klebstoffe mit elastischem Verhalten, insbesondere Silikonklebstoffe, oder Gele, insbesondere Gele mit einer geringen mechanischen Belastung und/oder mit einer geringen Druckbelastung, verwendet werden. Insbesondere kann für die Abdichtung des Drucksensors dasselbe Material verwendet werden, wie für die Passivierung des Temperatursensors.

Der Begriff "Federkontakt" bezeichnet im Sinne der vorliegenden Erfindung grundsätzlich ein beliebiges Element, welches elektrisch leitende Eigenschaften aufweist und welches ein elastisch rückstellendes Verhalten aufweist, derart, dass das Element unter einer Belastung nachgibt und nach einer Entlastung in eine ursprüngliche Gestalt des Elements zurückkehrt. Der Federkontakt kann elastisch komprimierbar sein und im komprimierten Zustand einen Druck ausüben. Insbesondere kann der Federkontakt eingerichtet sein, um durch Formänderungen Kräfte zu speichern und zu übertragen. Weiterhin kann der Federkontakt eingerichtet sein, um Energie durch Zusammendrücken von Enden des Federkontakts zu speichern und um die Energie bei einem Entspannen des Federkontakts ganz oder zumindest teilweise wieder freizugeben. Der Federkontakt kann vorzugsweise aus mindestens einem elektrisch leitfähigen Material hergestellt sein, insbesondere aus Stahl, Kupfer oder einer Kupferlegierung, insbesondere Bronze oder Messing.

Der Federkontakt kann während des Einbringens des Schaltungsträgers gegen den elektrischen Kontakt des Gehäuses gepresst werden und eine elektrische Verbindung mit dem elektrischen Kontakt herstellen.

Der Federkontakt kann insbesondere stoffschlüssig an mindestens eine Oberfläche des Schaltungsträgers angebracht werden. Insbesondere kann das stoffschlüssige Anbringen mindestens einen Prozess umfassen, ausgewählt aus der Gruppe bestehend aus: einem Lötverfahren, insbesondere einem Reflow-Lötverfahren, einem Klebeverfahren. Der Begriff "Lötverfahren" bezeichnet grundsätzlich ein thermisches Verfahren zu einem stoffschlüssigen Fügen von Werkstoffen, bei welchem eine flüssige Phase durch ein Schmelzen und/oder durch eine Diffusion an Grenzflächen entsteht. Der Begriff "Reflow-Lötverfahren", auch Wiederaufschmelzlöten genannt, bezeichnet ein gängiges Weichlötverfahren zum Löten von zwei oder von mehr Bauteilen. Grundsätzlich kann bei dem Reflow-Lötverfahren ein Weichlot in Form einer Lötpaste auf das Bauteil aufgetragen werden, bevor das Bauteil mit weiteren Bauteilen bestückt wird. Anschließend kann das Weichlot aufgeschmolzen werden. Das Klebeverfahren kann insbesondere eine Verwendung mindestens eines elektrisch leitfähigen Klebstoffs umfassen.

Weiterhin kann mindestens ein weiteres Bauteil stoffschlüssig auf die Oberfläche des Schaltungsträgers angebracht werden. Insbesondere kann das weitere Bauteil ausgewählt sein aus der Gruppe bestehend aus: der Steuer- und Auswerteeinheit; einem Bauteil, welches eingerichtet ist, um eine elektrische Verträglichkeit der Vorrichtung zu gewährleisten, insbesondere einem Kondensator.

Die Vorrichtung zur Erfassung mindestens einer Eigenschaft des fluiden Mediums in einem Messraum ist insbesondere herstellbar nach einem Ausführungsbeispiels des Verfahrens, welches bereits beschrieben wurde, oder im Folgenden noch beschrieben wird. Die Vorrichtung umfasst mindestens ein Gehäuse, mindestens ein Sensorelement zur Erfassung der Eigenschaft, mindesten einen Druckstutzen zur Beaufschlagung des Sensorelements mit dem fluiden Medium und mindestens einen Schaltungsträger. Das Gehäuse weist mindestens einen elektrischen Kontakt auf. Der Schaltungsträger ist elektrisch mit dem Sensorelement und mit dem elektrischen Kontakt des Gehäuses verbunden. Der Druckstutzen und das Gehäuse sind als separate Bauteile ausgebildet.

Das vorgeschlagene Verfahren zu Herstellung der Vorrichtung weist gegenüber bekannten Verfahren zahlreiche Vorteile auf. Dadurch, dass der Druckstutzen und das Gehäuse als separate Bauteile ausgebildet sind, kann grundsätzlich eine größere und/oder vereinfachte Darstellbarkeit von Varianten des Gehäuses, insbesondere eines Steckers, mit verschiedenen Druckanschlüssen und verschiedenen Steckern und/oder Steckerwinkeln abbildbar sein. Ein modularer Aufbau und damit eine einfache Variantenerstellung kann durch die Ausbildung von Druckstutzen und dem Gehäuse als separate Bauteile möglich sein. Weiterhin kann eine Konstruktion von Werkzeugen für eine Herstellung, insbesondere mittels eines Spritzgießverfahrens, des Gehäuses und/oder des Druckstutzens vereinfacht sein, insbesondere durch eine Reduktion einer Anzahl von Schiebeelementen des Werkzeugs für eine Endformung des Gehäuses und/oder des Druckstutzens.

Ein Inkontaktbringen des Temperatursensors kann mittels des Schneid-Klemmelements erfolgen. Der Temperatursensor, insbesondere die Anschlussleitung des Temperatursensors, kann zunächst gebogen werden und anschließend in das Gehäuse gesetzt werden. Das Schneid-Klemmelement kann in den Druckstutzen gesteckt werden und den Temperatursensor, insbesondere die Anschlussleitung des Temperatursensors, kontaktieren, insbesondere indem der Isolationsmantel der Anschlussleitung durchtrennt wird. Anschließend kann die Passivierung der Verbindungsstellen erfolgen, insbesondere durch einen Dichtgraben. Eine elektrische Kontaktierung des Schaltungsträgers, insbesondere der Leiterplatte, kann mittels des Federkontakts durch das Einbringen des Schaltungsträgers in das Gehäuse erfolgen. Eine Kontrolle der elektrischen Kontaktierung kann grundsätzlich in jedem Fertigungsschritt separat möglich sein. Es ist weiterhin eine separate Vormontage darstellbar.

Eine elektrische Kontaktierung des Sensorelements, insbesondere eines Sensormoduls, zu dem Gehäuse kann mittels des Federkontakts erfolgen. Der Federkontakt kann auf den Schaltungsträger, insbesondere auf die Leiterplatte oder eine Keramik, angelötet oder geklebt werden. Der Schaltungsträger kann zu einer einfachen Gestaltung nach oben gebogen sein. Die Bauteile, welche eingerichtet sind, um eine elektromagnetische Verträglichkeit zu gewährleisten, insbesondere die Kondensatoren, können ebenfalls auf den Schaltungsträger angelötet oder geklebt werden. Weitere Bauteile können auf dem Schaltungsträger, insbesondere auf der Oberseite des Schaltungsträgers mittels des Reflow-Lötverfahrens befestigt werden. Der Schaltungsträger, insbesondere eine Unterseite des Schaltungsträgers, kann vorzugsweise mittels mindestens einer Chiptechnik, beispielsweise mittels Kleben, Bonden, Vergelen, in das Gehäuse eingebracht werden. Eine Abdichtung zwischen dem Messraum und einem Inneren des Gehäuses kann insbesondere mittels Klebstoff erfolgen.

Die Steuer- und Auswerteeinheit, insbesondere die anwendungsspezifische integrierte Schaltung (ASIC), des Schaltungsträgers kann insbesondere empfindliche Kontaktierungsstrukturen aufweisen. Eine räumliche Trennung der Steuer- und Auswerteeinheit zu dem Sensorelement kann insbesondere durch eine Dichtmasse, insbesondere einen Gelrahmen erfolgen. Für eine Reduktion einer benötigen Fläche und für eine Optimierung einer Position der Bauteile, welche eingerichtet sind, um eine elektromagnetische Verträglichkeit zu gewährleisten, insbesondere der Kondensatoren, kann die Steuer- und Auswerteeinheit mittels mindestens einer Flip-Chip-Technik auf den Schaltungsträger, insbesondere auf die Leiterplatte, aufgebracht werden.

Aufgrund einer einfachen Steckerkontaktierung und einer einfachen Führung der elektrischen Kontakte, insbesondere der Steckerpins, kann grundsätzlich ein Einsatz von eingepressten elektrischen Kontakten möglich sein. Neben den eingepressten elektrischen Kontakten, kann ein Einsatz von eingespritzten elektrischen Kontakten möglich sein. Eine Verrastung an dem Gehäuse kann als Aushärtungshilfe, insbesondere für ein Gegenlager zu den Federkontakten, verwendet werden.

### Kurze Beschreibung der Figuren

Weitere optionale Einzelheiten und Merkmale der Erfindung ergeben sich aus der nachfolgenden Beschreibung bevorzugter Ausführungsbeispiele, welche in den nachfolgenden Figuren schematisch dargestellt sind.

Es zeigen:
- Figuren 1A und 1B: ein Ausführungsbeispiel einer erfindungsgemäßen Vorrichtung zur Erfassung mindestens einer Eigenschaft eines Mediums in zwei verschiedenen Schnittdarstellungen;
- Figur 2: eine perspektivische Darstellung einer Verrrastung; und
- Figuren 3A und 3B: zwei Ausführungsbeispiele eines Federkontakts in perspektivischer Darstellung.

### Ausführungsformen der Erfindung

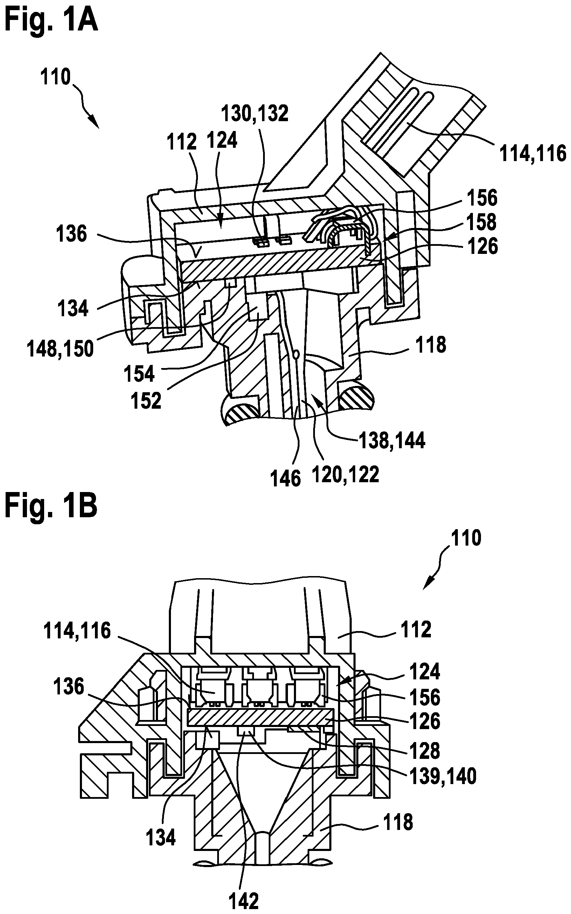

Figuren 1A und 1B zeigen ein exemplarisches Ausführungsbeispiel einer erfindungsgemäßen Vorrichtung 110 zur Erfassung mindestens einer Eigenschaft eines Mediums in zwei verschiedenen Schnittdarstellungen entlang einer Längserstreckungsrichtung der Vorrichtung 110.

Die Vorrichtung 110 umfasst mindestens ein Gehäuse 112. Das Gehäuse 112 umfasst mindestens einen elektrischen Kontakt 114. Der elektrische Kontakt 114 kann insbesondere ein Steckerpin 116 sein und aus einem elektrisch leitfähigen Material hergestellt sein. Insbesondere kann der elektrische Kontakt 114 eine längliche Form aufweisen.

Die Vorrichtung 110 umfasst weiterhin mindestens einen Druckstutzen 118. Der Druckstutzen 118 kann beispielweise rotationssymetrisch, beispielsweise in Form eines Hohlzylinders ausgestaltet sein. Der Druckstutzen 118 kann mindestens eine Durchführung 120 umfassen. Die Durchführung 120 kann insbesondere eine Bohrung 122 mit einem runden oder ovalen Querschnitt sein. Der Druckstutzen 118 und das Gehäuse 112 sind als separate Bauteile ausgebildet.

Das Gehäuse 112 kann weiterhin mindestens eine Aufnahme 124 aufweisen. In dem Gehäuse 112, insbesondere in der Aufnahme 124 des Gehäuses 112, kann mindestens ein Schaltungsträger 126 aufgenommen sein. Der Schaltungsträger 126 kann insbesondere mindestens eine Steuer- und Auswerteeinheit 128 umfassen. Weiterhin kann der Schaltungsträger 126 mindestens ein Bauteil 130 aufweisen, welches eingerichtet ist, um eine elektrische Verträglichkeit der Vorrichtung 110 zu gewährleisten. Insbesondere kann es sich bei dem Bauteil 130 um Kondensatoren 132 handeln. Die Steuer- und Auswerteeinheit 128 kann insbesondere auf einer Unterseite 134 des Schaltungsträgers 126 angeordnet sein. Die Kondensatoren 132 können insbesondere auf einer Oberseite 136 des Schaltungsträgers 126 angeordnet sein.

Weiterhin kann der Schaltungsträger 132 mindestens einen Federkontakt 156 aufweisen. Der Federkontakt 156 kann insbesondere auf einer Oberseite 158 des Schaltungsträgers 132 befestigt sein.

Die Vorrichtung 110 umfasst weiterhin ein als Temperatursensor 144 ausgebildetes Sensorelement 138. Der Temperatursensor 144 ist in dem Druckstutzen 118 angeordnet. Der Temperatursensor 144 umfasst mindestens eine Anschlussleitung 146. Die Anschlussleitung 146 ist in der Durchführung 120 des Druckstutzens 118 angeordnet.

Die Vorrichtung 110 weist als weiteres Sensorelement 139 einen Drucksensor 140 auf. Der Drucksensor 140 kann insbesondere auf der Unterseite 134 des Schaltungsträgers 126 angeordnet sein. Der Drucksensor 140 kann insbesondere mittels eines Gelrahmens 142 von einer Umgebung der Vorrichtung 110 abgedichtet sein.

Die Vorrichtung 110 umfasst mindestens ein Kontaktierungselement 148. Das Kontaktierungselement 148 kann insbesondere ein Schneid-Klemmelement 150 sein. Das Schneid-Klemmelement 150 kann insbesondere eingerichtet sein, um einen Isolationsmantel der Anschlussleitung 146 an mindestens einer Stelle einzuschneiden. Das Kontaktierungselement 148 kann insbesondere in dem Druckstutzen 118 aufgenommen sein.

Die Vorrichtung 110 kann weiterhin mindestens eine Passivierung 152 von Verbindungsstellen umfassen. Die Passivierung 152 kann in mindestens einen Dichtgraben 154 des Druckstutzens aufgenommen sein.

Weiterhin kann der Schaltungsträger 126 mindestens einen Federkontakt 156 aufweisen. Der Federkontakt 156 kann insbesondere auf einer Oberseite 158 des Schaltungsträgers 126 befestigt sein.

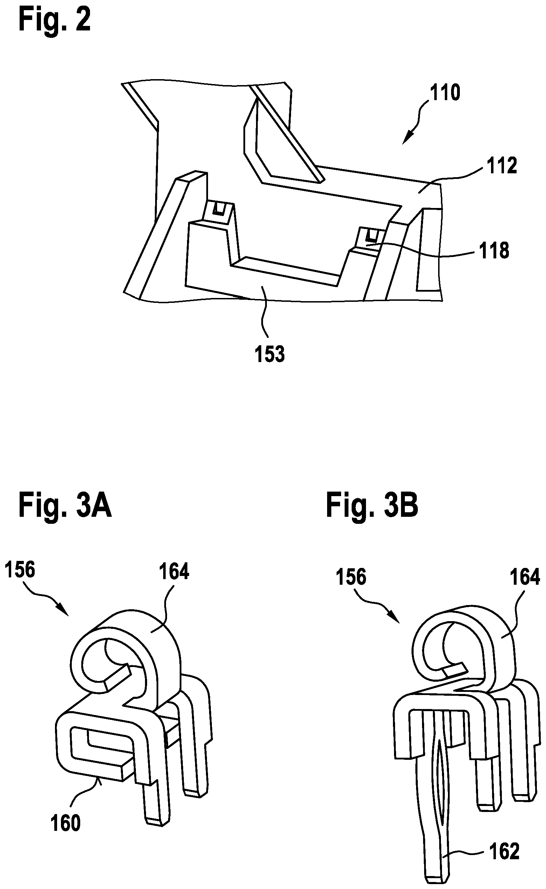

Figur 2 zeigt eine perspektivische Darstellung der erfindungsgemäßen Vorrichtung 110. Das Gehäuse 112 und der Druckstutzen 118 können formschlüssig miteinander verbunden sein. Insbesondere können das Gehäuse 112 und der Druckstutzen 118 miteinander verrastet sein. Das Gehäuse 112 kann mindestens eine Aufnahme 153 aufweisen und der Druckstutzen 118 kann mindestens einen Fortsatz 162 als komplementäres Element aufweisen, welches eingerichtet ist, um in die Aufnahme 153 aufgenommen und fixiert zu werden.

Figuren 3A und 3B zeigen zwei Ausführungsbeispiele eines Federkontakts 156 in perspektivischer Darstellung. Der Federkontakt 156 in dem Ausführungsbeispiel gemäß Figur 3A kann insbesondere eingerichtet sein, um auf dem Schaltungsträger 126, wie in den Figuren 1A und 1B dargestellt, angelötet oder geklebt zu werden. Hierfür kann der Federkontakt 156 insbesondere mindestens eine Auflagefläche 160 aufweisen. Der Federkontakt 156 in dem Ausführungsbeispiel gemäß Figur 3B kann insbesondere eingerichtet sein, um in Schaltungsträger 126, wie in den Figuren 1A und 1B dargestellt, eingepresst zu werden. Hierfür kann der Federkontakt 156 insbesondere mindestens einen länglichen Fortsatz 162 aufweisen. Der Fortsatz 163 kann insbesondere ein Kontaktpin für eine Einpressverbindung in den Schaltungsträger 126 sein. Der Federkontakt 156 kann weiterhin mindestens ein Federelement 164 aufweisen. Das Federelement 164 kann insbesondere elastisch komprimierbar sein und eingerichtet sein, um den elektrischen Kontakt 114, wie in den Figuren 1A und 1B dargestellt, elektrisch zu kontaktieren.

## Patentansprüche

1. Verfahren zur Herstellung einer Vorrichtung (110) zur Erfassung mindestens einer Eigenschaft eines fluiden Mediums in einem Messraum, wobei das Verfahren folgende Schritte umfasst:
a) Bereitstellen eines Gehäuses (112), wobei das Gehäuse (112) mindestens einen elektrischen Kontakt (114) aufweist;
b) Bereitstellen eines Druckstutzens (118), wobei der Druckstutzen (118) ausgebildet ist, um ein fluides Medium zu einem Drucksensor (140) zu führen, und eine Durchführung (120) aufweist, wobei der Druckstutzen (118) weiterhin mindestens ein Kontaktierungselement (148) umfasst;
wobei das Gehäuse (112) und der Druckstutzen (118) als separate Bauteile hergestellt werden,
c) Einbringen eines Sensorelementes (138) zur Erfassung der Eigenschaft in das Gehäuse (112), wobei das Sensorelement (138) als Temperatursensor (144) mit mindestens einer Anschlussleitung (146) ausgebildet ist und in dem Druckstutzen (118) angeordnet wird, wobei die Anschlussleitung (146) in der Durchführung (120) des Druckstutzens (118) angeordnet wird,
d) Inkontaktbringen des Kontaktierungselements (148) mit dem als Temperatursensor (144) ausgebildeten Sensorelement (138) derart, dass eine elektrische Verbindung zwischen dem Kontaktierungselement (148) und dem als Temperatursensor (144) ausgebildeten Sensorelement (138) hergestellt wird; wobei das Inkontaktbringen des Kontaktierungselements (148) mit dem als Temperatursensor (144) ausgebildeten Sensorelement (138) mindestens ein Schneidklemmverfahren umfasst;
und
e) Einbringen eines Schaltungsträgers (126), auf den der Drucksensor (140) aufgebracht ist, in das Gehäuse (112), derart, dass der Drucksensor (140) dem Druckstutzen (118) zuweist und der Schaltungsträger (126) mit dem elektrischen Kontakt (114) des Gehäuses (112) und, indem das Kontaktierungselement durch eine Einpresstechnik auf den Schaltungsträger aufgebracht wird, mit dem als Temperatursensor (144) ausgebildeten Sensorelement (138) elektrisch verbunden wird.

2. Verfahren nach dem der vorhergehenden Anspruch, wobei das Inkontaktbringen des Kontaktierungselements (148) mit dem als Temperatursensor (144) ausgebildeten Sensorelement (138) mittels mindestens einer Anschlussleitung(146) des als Temperatursensor (144) ausgebildeten Sensorelements (138) erfolgt, wobei die Anschlussleitung (146) mindestens einen Isolationsmantel umfasst, wobei das Kontaktierungselement (148) mindestens ein Schneid-Klemmelement (150) aufweist, wobei während Durchführung des Schritts d) der Isolationsmantel an mindestens einer Stelle eingeschnitten wird.

3. Verfahren nach einem der vorhergehenden Ansprüche, wobei vor Durchführung des Schritts d) mindestens eine Passivierung von Verbindungsstellen erfolgt.

4. Verfahren nach einem der vorhergehenden Ansprüche, wobei der Schaltungsträger (126) mindestens einen elektrischen Federkontakt (156) aufweist, wobei der Federkontakt (156) während des Einbringens des Schaltungsträgers (126) in das Gehäuse (112) gegen den elektrischen Kontakt (114) des Gehäuses (112) gepresst wird und eine elektrische Verbindung mit dem elektrischen Kontakt (114) herstellt.

5. Verfahren nach einem der vorhergehenden Ansprüche, wobei das Gehäuse (112) und der Druckstutzen (118) stoffschlüssig oder formschlüssig miteinander verbunden werden.

6. Verfahren nach dem vorhergehenden Anspruch, wobei das Gehäuse (112) und der Druckstutzen (118) mittels mindestens einer Verbindungstechnik miteinander verbunden werden, ausgewählt aus der Gruppe bestehend aus: Kleben, Verrasten.

## Claims

1. Method for producing a device (110) for detecting at least one property of a fluid medium in a measuring chamber, wherein the method comprises the following steps:
a) providing a housing (112), wherein the housing (112) has at least one electrical contact (114);
b) providing a pressure connector (118), wherein the pressure connector (118) is designed to convey a fluid medium to a pressure sensor (140) and has a feedthrough (120), wherein the pressure connector (118) also comprises at least one contacting element (148) ;
wherein the housing (112) and the pressure connector (118) are produced as separate components,
c) introducing a sensor element (138) for detecting the property into the housing (112), wherein the sensor element (138) is designed as a temperature sensor (144) with at least one connection line (146) and is arranged in the pressure connector (118), wherein the connection line (146) is arranged in the feedthrough (120) of the pressure connector (118);
d) bringing the contacting element (148) into contact with the sensor element (138) designed as a temperature sensor (144) in such a way that an electrical connection is established between the contacting element (148) and the sensor element (138) designed as a temperature sensor (144); wherein the bringing into contact of the contacting element (148) with the sensor element (138) designed as a temperature sensor (144) comprises at least one insulation-displacement method;
and
e) introducing a circuit carrier (126) to which the pressure sensor (140) has been applied into the housing (112) in such a way that the pressure sensor (140) faces the pressure connector (118) and the circuit carrier (126) is electrically connected to the electrical contact (114) of the housing (112) and, in that the contacting element is applied to the circuit carrier by a press-in technique, to the sensor element (138) designed as a temperature sensor (144) .

2. Method according to the preceding claim, wherein the bringing into contact of the contacting element (148) with the sensor element (138) designed as a temperature sensor (144) takes place by means of at least one connection line (146) of the sensor element (138) designed as a temperature sensor (144), wherein the connection line (146) comprises at least one insulating sleeve, wherein the contacting element (148) has at least one insulation-displacement element (150), and wherein the insulation sleeve is cut into at least one point during implementation of step d).

3. Method according to one of the preceding claims, wherein at least one passivation of connection points takes place before implementation of step d).

4. Method according to one of the preceding claims, the circuit carrier (126) having at least one electrical spring contact (156), wherein, during the introduction of the circuit carrier (126) into the housing (112), the spring contact (156) is pressed against the electrical contact (114) of the housing (112) and an electrical connection with the electrical contact (114) is established.

5. Method according to one of the preceding claims, wherein the housing (112) and the pressure connector (118) are connected to one another in a material-bonding or form-fitting manner.

6. Method according to the preceding claim, wherein the housing (112) and the pressure connector (118) are connected to one another by means of at least one connecting technique selected from the group consisting of: adhesive bonding, snapping into place.

## Revendications

1. Procédé de fabrication d'un dispositif (110) destiné à détecter au moins une propriété d'un milieu fluide dans une chambre de mesure, le procédé comprenant les étapes suivantes :
a) fournir un boîtier (112), le boîtier (112) comportant au moins un contact électrique (114) ;
b) fournir un raccord de pression (118), le raccord de pression (118) étant conçu pour guider un milieu fluide vers un capteur de pression (140) et comportant un passage (120), le raccord de pression (118) comprenant également au moins un élément de contact (148) ;
le boîtier (112) et le raccord de pression (118) étant fabriqués sous la forme de composants séparés,
c) introduire dans le boîtier (112) un élément capteur (138) destiné à détecter la propriété, l'élément capteur (138) étant conçu comme un capteur de température (144) pourvu d'au moins une ligne de raccordement (146) et étant disposé dans le raccord de pression (118), la ligne de raccordement (146) étant disposée dans le passage (120) du raccord de pression (118),
d) mettre l'élément de contact (148) en contact avec l'élément capteur (138) conçu comme un capteur de température (144) de manière à établir une liaison électrique entre l'élément de contact (148) et l'élément capteur (138) conçu comme un capteur de température (144) ; la mise en contact de l'élément de contact (148) avec l'élément capteur (138) conçu comme un capteur de température (144) comprenant au moins un procédé à guillotine ;
et
e) introduire un support de circuits (126), sur lequel le capteur de pression (140) est monté, dans le boîtier (112) de manière à ce que le capteur de pression (140) soit dirigé vers le raccord de pression (118) et la support de circuits (126) étant relié électriquement au contact électrique (114) du boîtier (112) et, par application de l'élément de contact sur le support de circuit par une technique d'enfoncement, à l'élément capteur (138) conçu comme un capteur de température (144).

2. Procédé selon la revendication précédente, la mise en contact de l'élément de contact (148) avec l'élément capteur (138) conçu comme un capteur de température (144) étant effectuée au moyen d'au moins une ligne de raccordement (146) de l'élément capteur (138) conçu comme un capteur de température (144), la ligne de raccordement (146) comprenant au moins une gaine isolante, l'élément de contact (148) comportant au moins un élément à guillotine (150), la gaine isolante étant coupée en au moins un emplacement pendant la réalisation de l'étape d).

3. Procédé selon l'une des revendications précédentes, au moins une passivation des points de connexion étant effectuée avant la réalisation de l'étape d) .

4. Procédé selon l'une des revendications précédentes, le support de circuits (126) comportant au moins un contact à ressort électrique (156), le contact à ressort (156) étant pressé contre le contact électrique (114) du boîtier (112) pendant l'introduction du support de circuits (126) et une liaison électrique étant établie avec le contact électrique (114).

5. Procédé selon l'une des revendications précédentes, le boîtier (112) et le raccord de pression (118) étant reliés l'un à l'autre par une liaison de matière ou une liaison par complémentarité de formes.

6. Procédé selon la revendication précédente, le boîtier (112) et le raccord de pression (118) étant reliés l'un à l'autre par au moins une technique de liaison choisie dans le groupe comprenant : le collage, l'encliquetage.
